(19) Europäisches Patentamt
European Patent Office
Office européen des brevets

(11) **EP 2 061 241 A1**

(12) **EUROPEAN PATENT APPLICATION**
published in accordance with Art. 153(4) EPC

(43) Date of publication:
**20.05.2009 Bulletin 2009/21**

(21) Application number: **07792978.4**

(22) Date of filing: **24.08.2007**

(51) Int Cl.:
*H04N 5/93* (2006.01)      *G11B 27/10* (2006.01)
*H04N 5/91* (2006.01)      *H04N 5/92* (2006.01)
*H04N 7/26* (2006.01)

(86) International application number:
**PCT/JP2007/066449**

(87) International publication number:
**WO 2008/029640 (13.03.2008 Gazette 2008/11)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.09.2006 JP 2006240281**

(71) Applicant: **Panasonic Corporation**
**Kadoma-shi**
**Osaka 571-8501 (JP)**

(72) Inventors:
• **MIYAKE, Yasushi**
**c/o Panasonic Corporation**
**Chuo-ku, Osaka 540-6207 (JP)**

• **OOI, Chia Chin**
**c/o Panasonic Kuala Lumpur Laboratory**
**Penthouse Suite**
**63000**
**Cyberjaya Selangor**
**Darul Ehsan (MY)**
• **KARUPPIAH, Ettikan Kandasamy,**
**c/o Panasonic Kuala Lumpur Laboratory**
**63000**
**Cyberjaya Selangor, Darul Ehsan (MY)**
• **TAN, Pek Yew,**
**c/o Panasonic Singapore Laboratories Pte.Ltd**
**Singapore 534415 (SG)**

(74) Representative: **Ehlers, Jochen**
**Eisenführ, Speiser & Partner**
**Patentanwälte Rechtsanwälte**
**Postfach 10 60 78**
**28060 Bremen (DE)**

(54) **METHOD AND DEVICE FOR PLAYING VIDEO DATA OF HIGH BIT RATE FORMAT BY PLAYER SUITABLE TO PLAY VIDEO DATA OF LOW BIT RATE FORMAT**

(57)      A player which is capable of playing a video data of low bit rate format, e.g., DVD-VR format, can not play a video data of high bit rate format, e.g., BD-RE format unless the video data is transcoded. Transcoding of video data generally requires a large size storage area. Based on an original navigation information for the video data of high bit rate format, a predictive navigation information for the video data of low bit rate format is generated. Using the original and predictive navigation information, the transcoding is done by sections.

*Fig.3A*

EP 2 061 241 A1

**Description**

FIELD OF THE INVENTION

The present invention relates method and apparatus for playing video data of high bit rate format by a player capable of playing video data of low bit rate format. More particularly, the present invention relates to the prediction of navigation information used for seamless AV media playback in multiple formats. In particular, the invention provides apparatus and method to achieve real time streaming for networked computing devices and to enable offline playback of transcoded AV media requested by Digital Media Player (DMP) among heterogeneous computing devices. Each computing device may support different AV media formats. Prediction of navigation information on Digital Media Server (DMS) is invoked prior to transcoding of original AV media format to the AV media format requested by DMP. Both the continuous and discontinuous, e.g. after user editing, AV media are supported by the prediction of navigation information.

BACKGROUND OF THE INVENTION

The recent advancement in networking technologies has enabled communication capabilities among networked computing devices, such as home consumer electric (CE) devices and handheld devices. Network CE devices such as Digital Versatile Disc (DVD) recorder are widespread in home network and each of them can function as either DMS or DMP or both. These devices can either playback AV media stored locally, or playback AV media stored remotely in other devices via network streaming, e.g. DMS streams AV media stored in its storage units to the DMP upon DMP request.
On the other hand, the number of AV media formats is increasing as a result of the high popularization of digital broadcasting and the emergence of new AV media formats such as Blu-ray Disc (BD) format. As a result, format incompatibility happens when DMP attempts to playback AV media format of DMS that is not supported by the DMP. Specifically, a DVD-VR device can playback DVD-VR media that is stored either locally or remotely. However, the device does not support new AV media format such as BD format. Therefore, this DVD-VR device is not able to playback BD media even though BD media can be acquired successfully to the DVD-VR device, either through network streaming or copied from portable media storage unit, such as Secure Digital (SD) Card. The portable media storage unit can be ported to other computing device for offline playback of the stored AV media. Backward compatibility and interoperability among networked computing devices are necessary so that media device is not limited to playback only its supported types of AV media format.
For movie streaming, some computing devices, e.g. a DVD-VR device needs two types of information to achieve DVD-VR media playback. First information is the AV media that contains AV stream. However, with only AV media, DMP can merely achieve normal playback mode in which AV media is played continuously from the beginning to the end. Second information is the navigation information that contains navigation information required to playback AV media in either normal playback mode or trick play mode. Navigation information is defined by each AV media format and it contains the mapping information of the playback time and the position of AV media. With the navigation information, trick play mode such as seek, fast forward and rewind, can be achieved. In particular, each AV media format has its specifically defined structure of AV media and navigation information. One common example is DVD format that defines video object block (VOB) and information format (IFO) as its AV media and navigation information file respectively.

DISCLOSURE OF INFORMATION ON PRIOR ART DOCUMENTS

[Patent Document 1] US Patent 6,463,445 B1
[Patent Document 2] US Patent Application Publication 2004/0054689 A1
[Patent Document 3] EP 1524855 A1
[Patent Document 4] EP 0920203 A2
[Patent Document 5] US Patent Application Publication 2003/0021587 A1

SUMMARY OF THE INVENTION

(Problems to be solved by the invention)

Even though existing solutions are capable of providing backward compatibility and interoperability among networked computing devices, there are several drawbacks. First, existing solutions do transcoding of requested AV media prior to generating its corresponding navigation information based on the transcoded AV media. Therefore, it has to allocate storage spaces for different AV media formats so that the navigation information can be generated based on the requested AV format. In this case, the memory and storage consumption are high especially when the AV media is lengthy and the number of AV media stored in DMS is large.

Second drawback is that the time taken to transcode the entire AV media causes delay in rendering the requested navigation information to DMP, because the desired navigation information can only be generated upon completion of the transcoding of the whole AV media. As a result, existing solution avoids the real time playback of streamed AV media at DMP, which has to wait for the availability of navigation information before requesting for AV media. Apart from this, other solutions provide the interoperability of AV media access without utilizing the navigation information. However, only normal playback is enabled at DMP because trick play mode cannot be realized.

(Means for solving the problems)

This present invention relates to the prediction of navigation information used for seamless playback of multi-format AV media. In particular, the invention provides apparatus and method on DMS to achieve on-demand real time streaming for networked computing devices and to enable offline playback of transcoded AV media requested by Digital Media Player (DMP) among heterogeneous computing devices, e.g. home CE devices, which support different AV media formats.

Present invention has an intelligent mechanism to counter the above drawbacks. To avoid the problem of high storage consumption, present invention transcodes only the range of requested AV media, stores in temporary media storage, and sends the transcoded AV media to the DMP. It is important for resource-limited computing device especially in home CE network, where high volumes of AV media can be exchanged among the network CE devices. Present invention predicts navigation information based on original navigation information rather than the transcoded AV media. Without parsing the transcoded AV media, predictive navigation information can be generated with negligible delay and thus, aids in achieving real-time AV playback at DMP.

(Advantageous effect of the invention)

The predictive navigation information can be generated before the transcoding of the video data of high bit rate format to the video data of low bit rate format.

The trasncoding of the video data can be carried out in real time. Thus, the viewer can watch the video without any waiting time.

The transcoding of the video data is carried out in sections. Thus, the memory size can be made small size, which is sufficient to do the transcoding of one section.

BRIEF DESCRIPTION OF THE DRAWINGS

The embodiments of the invention are supplemented with drawings to illustrate the invention with reference to specific figure elements. Repetitive instances are covered by the specific instances which have been covered with a specific figure element.

Fig.1 shows a simple heterogeneous communication network with multiple computing devices.

Fig.2A shows a block diagram of DMS showing various sub-systems, hardware, and software components.

Fig.2B shows a block diagram of DMP, in which playback of transcoded AV media is realized with the aid of navigation information prediction.

Fig.3A is a communication chart showing data flow between the DMS and DMP.

Fig. 3B is diagram showing a step to produce a predictive navigation information.

Fig.4 is a communication chart showing data flow between internal and portable storage units for offline AV media.

Fig. 5 is a communication chart showing data flow for the predictive navigation information and transcoded AV media between DMS and DMP that support different AV media formats.

Fig.6 shows a block diagram of a DMS that includes the navigation information prediction subsystem and AV media transcoding manager, which enables real time streaming and playback.

Fig.7 is a flow chart illustrating steps performed by DMS for predicting navigation information.

Fig.8 is a flow chart illustrating steps performed by DMS for transcoding of original AV media to the AV media format compatible to requesting DMP.

Fig.9 is a diagram showing a step to generate a range mapping table based on original and predictive navigation information.

Fig.10 is a diagram showing an example of the conversion condition table used for navigation information prediction.

Fig. 11 is a diagram showing steps how the padding subsystem works on transcoded AV media.

Fig. 12 is a flow chart showing steps performed by DMS during navigation information prediction for discontinuous stream.

Fig. 13 is a flow chart showing steps to identify and solve the discontinuity problem while predicting the navigation information.

DETAILED DESCRIPTION OF THE PREFERRED EMBODIMENTS

Preferred embodiments of the present invention are described below with reference to the accompanying figures. Note that like reference numerals in the figures denote identical components performing identical actions and operations.

Embodiments of the present invention are related to DMS (digital media server) and DMP (digital media player) involving AV media transcoder, AV media streaming and playback via network or offline AV media playback, prediction of navigation information for both continuous and discontinuous AV media and media retrieval method based on range mapping between two streams in different formats. The embodiment of the present invention also relates to the padding subsystem to ensure consistency of predictive and transcoded stream size. More specifically, the present invention is related to apparatus, system and method of navigation information prediction provided by DMS that enable offline or real time playback of transcoded AV media in requesting DMP.

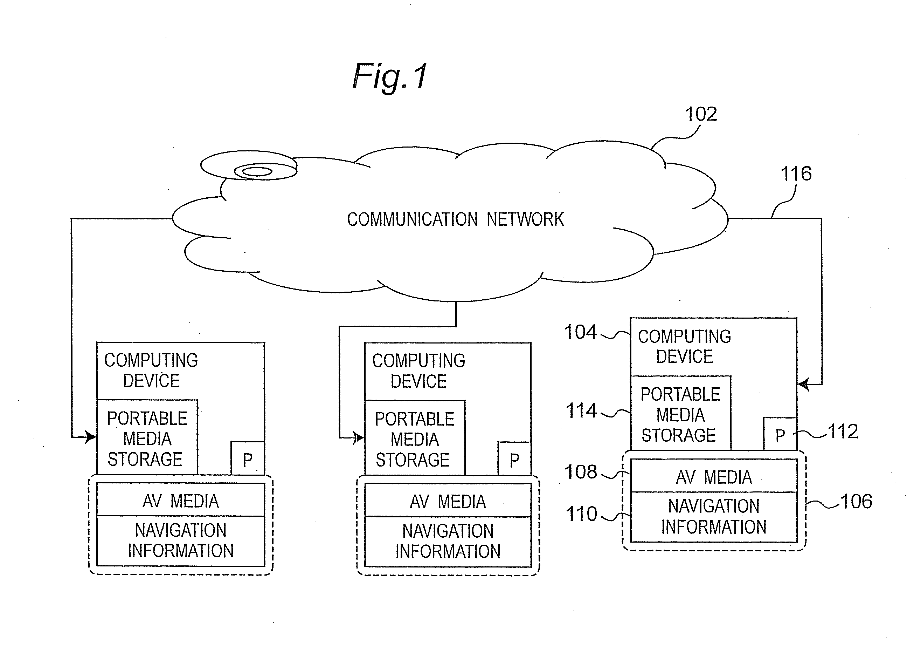

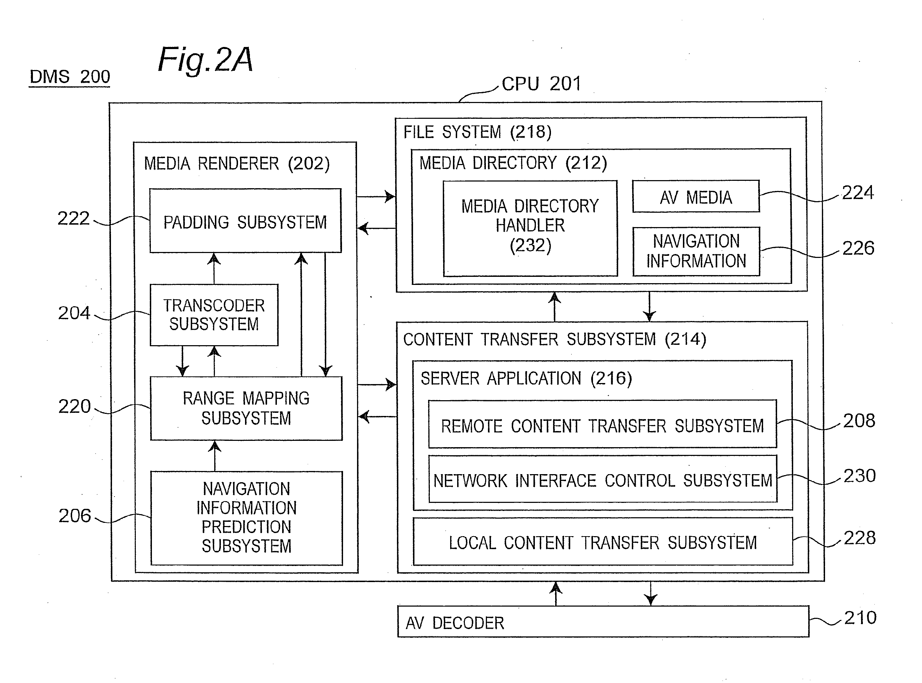

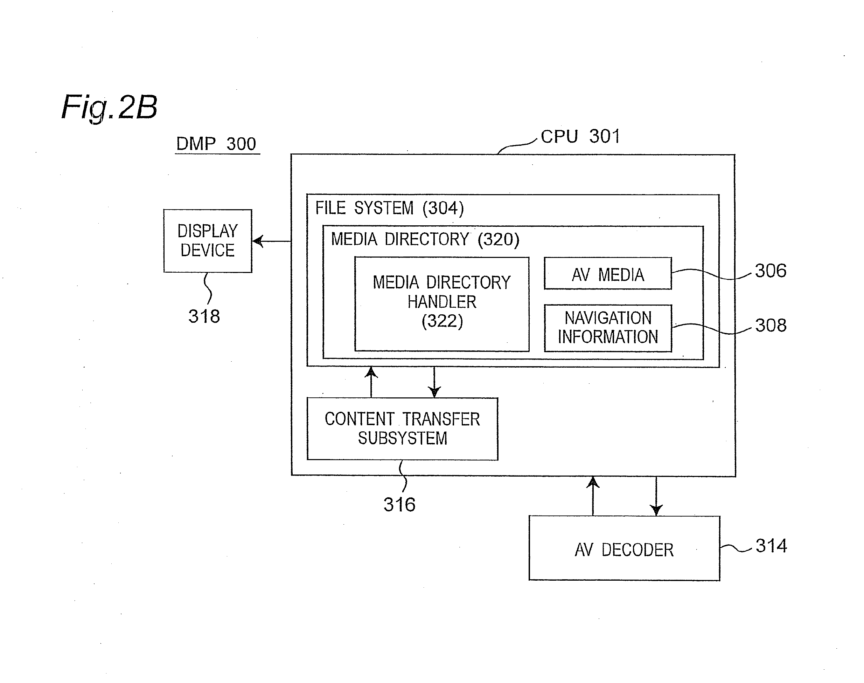

First, the present invention is described according to one specific example. Fig. 2A shows a DMS 200 which is a blu-ray disc recorder located in a living room and which can reproduce a high quality picture on the monitor screen. Fig. 2B shows a DMP 300 which is a DVD-VR player with a display device, and is located in a bed room and which can reproduce a standard quality picture on the monitor screen. DMS 200 and DMP 300 are connected by a home network system, such as shown in Fig. 1. DMS 200 is stored with a movie M1 in a high quality picture format. If the movie M1 is played in the living room by DMS 200, i.e., the blu-ray disc recorder, a very clear and fine picture is displayed. If the movie M1 is transmitted from DMS 200 to DMP 300, i.e., to the DVD-VR player through the home network, the DMP 300 down converts the movie M1 to a standard quality picture format producing a less fine picture. As understood from the above, when the movie M1 is played by the DMP 300 in the bed room, the picture will be less fine than the picture played in the living room. The down converting of the movie M1 can be effected either in DMS 200 or in DMP 300. In the example given below, the down converting is effected in DMS 200. For transmitting the movie M1 from DMS 200 to DMP 300, the data is transmitted in packets at a rate of data amount controlled by the controller.

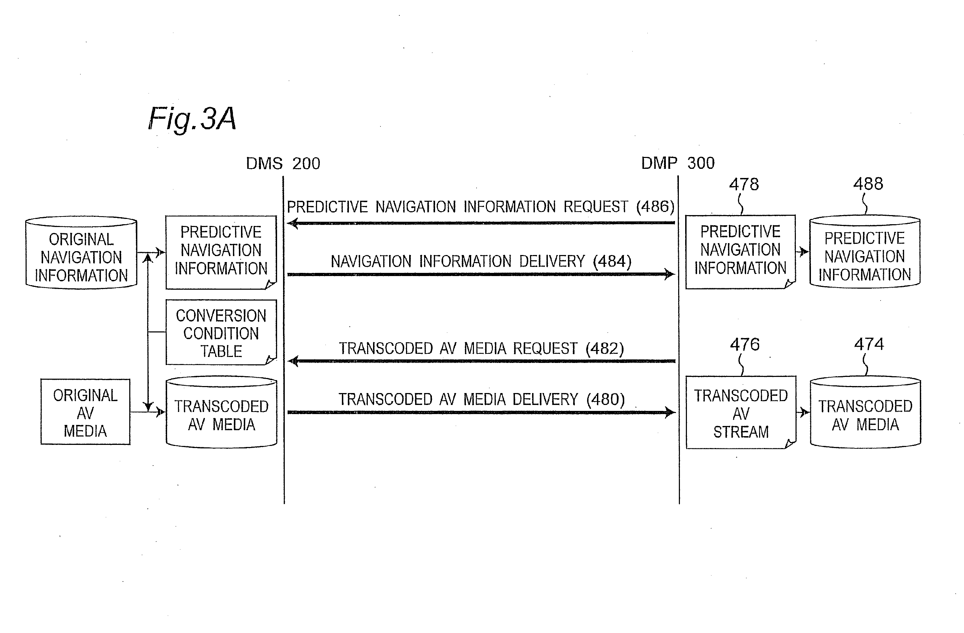

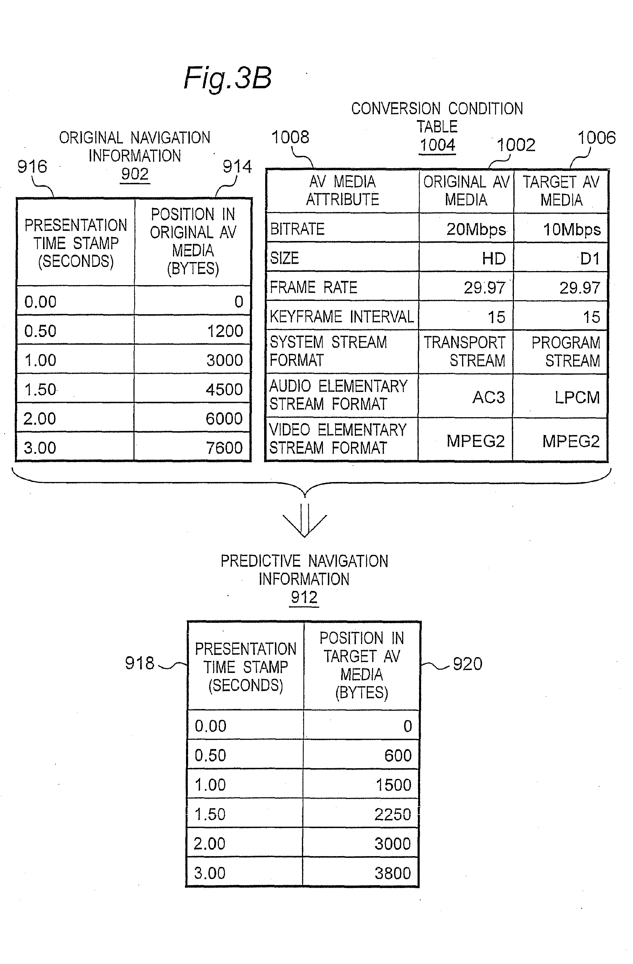

Referring to Fig. 3A, a diagram is shown for data transmission between DMS 200 and DMP 300. It is assumed that a viewer in the bed room wishes to see the movie M1 stored in the DMP 300 located in the living room. At first, DMP 300 sends a predictive navigation information request 486 to DMS 200. Upon receipt of the predictive navigation information request 486, DMS 200 prepares a predictive navigation information 912 based on an original navigation information 902 and a conversion condition table 1004, which are shown in Fig. 3B. The navigation information is also called index information, or IFO.

Referring to Fig. 3A, the original navigation information 902, which is included as meta data in the content of movie M1, includes a list of playing time and byte position, more specifically a list of presentation time stamp and a corresponding list of position in bytes in the original AV media. For example, from the very beginning of the data to 0.5 second time lapse, 1200 byte data exists. Thus, in order to see a picture of 0.5 second from the beginning, it is necessary to decode a frame of picture starting from 1200 byte measured from the beginning of the data stream. If one wishes to see a portion of the movie from 1.5 seconds, counted from the beginning, to 2.0 seconds, counted from the beginning, a portion of the data stream starting from 4500 byte measured from the beginning until 5999 byte measured from the beginning should be used.

It is to be noted that the original navigation information 902 as explained above is applicable to DMS 200, i.e., the blu-ray disc recorder which has a bit rate of 20Mbps (this number is just an example), but is not applicable to DMP 300, i.e., the DVD-VR player which has a bit rate of 10Mbps (this number is just an example).

According to the present invention, the original navigation information 902 is converted, using a conversion condition table 1004, to a predictive navigation information 912 which is applicable to DMP 300, i.e., the DVD-VR player.

As shown in Fig. 3B, the conversion condition table 1004 includes various AV media attributes such as, bit rate, size, frame rate, key frame interval, system stream format, audio elementary stream format, and video elementary stream format. In the conversion condition table 1004, specific information for the original AV media and specific information for the target AV media are given for each of the attributes. Here, the information for the original AV media is the information necessary to operate the DMS 200 of blu-ray disc recorder, and the information for the target AV media is the information necessary to operate the DMP 200 of DVD-VR player.

According to the conversion condition table 1004, it is indicated that: the bit rate for the original AV media is 20 Mbps, and that for the target AV media is 10 Mbps; the size for the original AV media is HD with the screen ratio of 16:9 for the screen width to height, and that for the target AV media is D1 with the screen ratio of 3:2 for the screen width to height; the frame rate for both media are 29.97; the key frame interval for both media are 15; the system stream format for the original AV media is the transport stream, and that for the target AV media is the program stream; the audio elementary stream format for the original AV media is the AC3, and that for the target AV media is the LPCM; and the video elementary stream format for both media are the MPEG2. The conversion condition table 1004 is prepared and stored in DMS 200. When a new device is connected to the home network system, information of the new device is sent to DMS 200 which adds the information of the new device in the conversion condition table 1004.

In the conversion condition table 1004, the bit rate is the attribute that is necessary for the present invention. Other attributes can be omitted.

According to the present invention, the original navigation information is converted to the predictive navigation information using the bit rate information. Generally, the following relationship can be given.

$$\text{(Position in original AV media)} : \text{(Position in target AV media)}$$
$$= \text{(Original AV media bit rate)} : \text{(Target AV media bit rate)}$$

Thus,

$$\text{(Position in target AV media)} = \text{(Position in original AV media)}$$
$$\times \ \text{(Target AV media bit rate)} / \text{(Original AV media bit rate)}$$

is obtained.

For example, after 0.5 seconds from the beginning, the position (in bytes) in target AV media can be calculated by the following formula.

$$1200 \times (10 / 20) = 600$$

In the same manner, the positions in target AV media at different times are calculated to obtain the predictive navigation information, as shown in Fig. 3B.

Referring again to Fig. 3A, when DMS 200 prepares the predictive navigation information, DMS 200 sends or delivers the predictive navigation information to DMP 300, as navigation information delivery 484. In DMP 300, the predictive navigation information is stored in a storage 488.

Thereafter, when the user wishes to watch the movie M1 in the bed room, the user enters a play signal. In response to the play signal, DMP 300 reads the predictive navigation information of movie M1, and sends a transcoded AV media request 482 to DMS 200. For example, when a portion of movie M1 covering 0.00 - 0.50 second is requested, DMP 300 produces a transcoded AV media stream request of 0 - 599 bytes. This request in data size of transcoded AV media stream is changed to the request in time domain, that is 0.00 - 0.50 second. The request in time domain is transmitted from DMP 300 to DMS 200 as a transcoded AV media request 482. Then, in DMS 200, using the time domain request and the original navigation information 902, a portion of movie M1 measured in bytes in the original AV media is detected. In this case, such a portion is 0 - 1199 bytes. Thus, in DMS 200, a portion (0 - 1199 bytes) in the original AV media is taken up and processed for conversion from the BD-RE format to DVD-VR format. Transcoded portion of movie M1 in the DVD-VR format has a data size of 599 bytes or less, which is about a half of 1200 bytes, that is about a half of the data size of the same portion of movie M1 in the BD-RE format.

Then, the transcoded portion of movie M1 in the DVD-VR format, which is about 599 byte data, is transmitted from DMS 200 to DMP 300 as transcoded AV media delivery 480. Then, in DMP 300, the transcoded portion of movie M1 in the DVD-VR format is used for playing on the screen for the requested a period of 0.00 - 0.50 second.

Thereafter, DMP 300 may produce another transcoded AV media stream request of 600 - 1499 bytes for the following portion of the movie M1.

As apparent from the above, to play a video data of high bit rate format stored in DMS 200 by a player, DMP 300, which is capable of playing a video data of low bit rate format, the following steps are carried out.

(A1) Reading an original navigation information from the video data of high bit rate format in DMS 200.

(A2) Converting the original navigation information into a predictive navigation information in DMS 200, the predictive navigation information being applicable to the video data of low bit rate format.

(A3) Sending the predictive navigation information from DMS 200 to DMP 300. (A4) Requesting by DMP 300, based on the predictive navigation information, a section of the video data of low bit rate format in a low bit rate byte information, wherein the low bit rate byte information includes a starting byte position and an end byte position of the section of the video data of low bit rate format for playing by DMP 300.

(A5) Converting, based on the predictive navigation information, the low bit rate byte information into a time domain information including a starting time and an end time for playing.

(A6) Converting, based on the predictive navigation information and the original navigation information, the time domain information into a high bit rate byte information, wherein the high bit rate byte information includes a starting byte position and an end byte position of the section of the video data of high bit rate format.

(A7) Retrieving, based on the high bit rate byte information, the section of the video data of high bit rate format from the video data stored in DMS 200.

(A8) Transcoding the section of the video data of high bit rate format to a section of the video data of low bit rate format in DMS 200.

(A9) Sending the section of the video data of low bit rate format from DMS 200 to DMP 300.

It is noted that, according to one embodiment, the high bit rate corresponds to the original AV media bit rate, and the low bit rate corresponds to the target AV media bit rate, but the invention is not limited to this arrangement. According to the present invention, it is possible to convert from the low bit rate to the high bit rate, or vice versa.

In the embodiment described above, steps (A6), (A7) and (A8) are explained as being carried out in DMS 200, but step (A6) can be carried out in DMP 300. In this case, the transcoded AV media request 482 can be, instead of the request in time domain, the high bit rate information obtained at step (A6). Also step (A8) can be carried out in DMP 300.

Furthermore, step (A5) which is explained as being carried out in DMP 300, can be carried out in DMS 200. In this case, the transcoded AV media request 482 can be, instead of the request in time domain, the low bit rate information obtained at step (A4).

In the embodiment described above, the video data stored in DMS 200 is transferred in sections and played by DMP 300. The present invention can be applied to a player which is capable of playing a video data of low bit rate format, and provided with a storage device for storing a video data of high bit rate format. To play by such a player, the following steps are carried out.

(B1) reading an original navigation information from the video data of high bit rate format.

(B2) converting the original navigation information into a predictive navigation information which is applicable to the video data of low bit rate format.

(B3) requesting, based on the predictive navigation information, a section of the video data of low bit rate format in a low bit rate byte information, said low bit rate byte information including a starting byte position and an end byte position of the section of the video data of low bit rate format for playing by the player.

(B4) converting, based on the predictive navigation information and the original navigation information, the low bit rate byte information into a high bit rate byte information, said high bit rate byte information including a starting byte position and an end byte position of the section of the video data of high bit rate format.

(B5) retrieving, based on the high bit rate byte information, the section of the video data of high bit rate format from the storage device.

(B6) transcoding the section of the video data of high bit rate format to a section of the video data of low bit rate format.

Step (B4) can be accomplished by multiplying each of the starting byte position and the end byte position of the section of the video data of low bit rate format by (low bit rate) / (high bit rate). Such a player can be constructed by combining DMS 200 (without decoder 314) and DMP 300.

Such a player has an advantage that the player can play a video data which has a higher bit rate than the bit rate that the player can process.

The present invention will be explained in more detail below.

Fig. 1 describes a sample communication network 102 that connects multiple computing devices 104 via network connection 116 such as 802.11 or Ethernet, either wired or wireless. Each of these computing devices has its own internal media storage unit 106, portable media storage unit 114, and a processing unit 112. The processing unit 112 can be either a software executable processor or an LSI processor performing specific functions. These computing devices may have different functions and purposes with different capabilities, device configurations and mobile behavior in the network.

The internal media storage unit 106 contains but not limited to the AV media 108, the conversion condition table and also navigation information 110 for the AV media along with the range map generated during navigation information prediction. The format of navigation information 110 and AV media 108 are supported by the computing devices where they reside. AV media and its navigation information generated for requesting DMP are removed from the internal media storage unit 106 to avoid storage wastage. Other than internal media storage unit 106, each computing device may have the portable media storage 114 that allows copying of predictive navigation information and original AV media for offline playback on other computing device.

Navigation information is required to playback the AV media. The contents of navigation information include the size of AV structure, which is format-dependent, the presentation time, the address of AV structure, the mapping of the presentation time to the address of AV structure and other AV media attributes. Two examples of navigation information are IFO for DVD-VR format, and clip information and real playlist for BD-RE format. Note that the address of AV structure means the offset or byte position of AV structure from the beginning of the AV media for a particular presentation time. The address of either AV structure or AV media mentioned in the remaining of the document refers to the same meaning of the address used in this paragraph.

Each computing device in the network is able to access and playback the AV media stored in other networked computing devices, which work as DMS and have the navigation information prediction subsystem. Additionally, the computing device can also copy the predictive navigation information from DMS for offline playback. DMS provides backward compatibility feature so that requesting DMP that does not support new AV format is able to playback the AV media stored in DMS. Fig. 2A shows the components in DMS of present invention. The DMS 200 contains various subsystems, hardware, and software components, and basically a CPU 201 and an AV decoder 210 capable of decoding a video data of high bit rate format. AV decoder 210 can be included as one function of CPU 201. The function of CPU 201 is explained below.

A media renderer 202 is responsible to meet the functionality and capability of DMP, such as supported AV format, based on the DMP request by producing the navigation information and AV media compatible to DMP. In the illustrative embodiment, the media renderer 202 consists of four subsystems, namely transcoder subsystem 204, navigation information subsystem 206 and range mapping subsystem 220 and padding subsystem 222.

The transcoder subsystem 204 transcodes AV media to and from different formats including MPEG video, MPEG ES, MPEG TS or MPEG PS. The transcoder subsystem 204 is able to transcode either the entire AV media or only a range, or a section, of AV media, based on the range specified in the requested signal from the DMP. In the latter, the range of stream to be encoded is based on the range requested by DMP. Since different formats of AV media have different AV data structures, different format has different range for one original media. Therefore, a range mapping subsystem 220 provides the corresponding range between range of original AV media format and range of requested AV media format. Next, padding subsystem 222 is responsible for ensuring the consistency between the predictive and transcoded stream size, which is important to guarantee proper AV playback, which is based on predictive navigation information.

On the other hand, navigation information prediction subsystem 206 is responsible for predicting and generating the navigation information for the AV media format compatible to requesting DMP. Prediction of navigation information is carried out prior to the transcoding of original AV media to the format compatible to requesting DMP. The outcome of the navigation information prediction subsystem 206 is the navigation information compatible to the AV media format requested by DMP.

A media directory 212 running a media directory service involves in determining the AV media type based on requesting DMP. Media directory includes both AV media 224 and navigation information 226 stored in the file system 218 for different media types. The navigation information includes but not limited to the AV data size, AV bit rate, presentation time, discontinuity information and AV stream information. Media directory handler 232 categorizes the AV media and navigation information according to the AV format, e. g. media type 1 is the DVD-VR device-compliant PS and IFO files while media type is the BD-RE device-compliant TS and its navigation information files. An example of the media directory 212 management is that only the default media directory on DMS is accessible by certain specific DVD-VR device, e. g. the directory /Directory level 1/ Directory level 2/ Directory level 3. The media directory can be either a pre-configured fixed directory or dynamically created directory that exists prior to the sending of AV media or navigation information file to the requesting device.

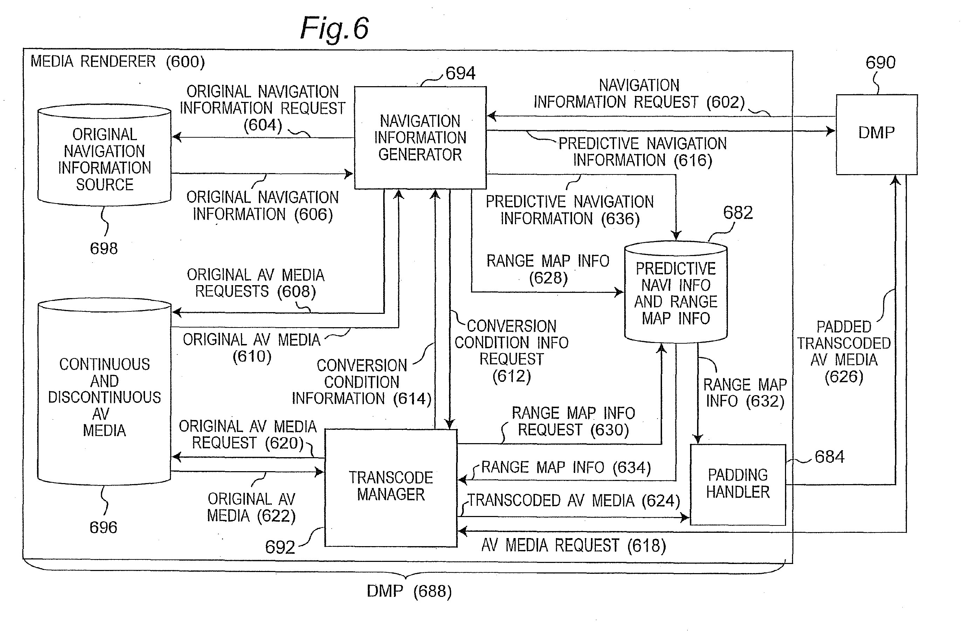

For content transfer purpose, the content transfer subsystem 214 is responsible to determine whether the request originates from remote computing device or portable media storage unit. The server application 216, along with the remote content transfer subsystem 208 and network interface control subsystem 230, handles the content transfer to requesting DMP in the network. On the other hand, the local content transfer subsystem 228 is responsible for the content transfer between internal media storage unit 106 and portable media storage unit 114. Lastly, an AV decoder 210 such as MPEG decoder may exist if DMS is capable of AV media playback locally. Fig. 6 presents a more detailed illustration on the interactions among modules within DMS 200.

To work with DMS of present invention, a DMP must be a computing device with either the network capability or portable media storage unit. In the former, the DMP requests to access AV media in DMS via communication network. In the latter, the DMP performs offline playback based on predictive navigation information and original AV media copied from DMS. Offline playback is performed on DMP that has the capability to transcode the copied original AV media. The DMP transcodes the copied original AV media to the target AV media format playable in DMP based on the copied predictive navigation information, along with the conversion condition table,

An example of a DMP is depicted in Fig. 2B. The DMP 300 is a DVD player basically has a CPU 301 and an AV decoder 314 capable of decoding a video data of low bit rate format and a display device 318. The function of CPU 301 is explained below. AV decoder 314 can be included as one function of CPU 301.

Numerous functional subsystems includes content transfer subsystem 316, media directory 320 containing both AV media 306 and navigation information 308, which are categorized by media directory handler 322, within the file system 304, and a display device 318. For real time AV media streaming and playback, the DMP communicates with DMS via network to request for predictive navigation information and AV media from DMS. For offline playback, the DMP obtains the predictive navigation information and AV media copied from DMS via portable media storage. The content transfer subsystem 316 handles the media transfer to or from DMS via network if the request signal is from the DMS or portable media storage unit if the request signal is from the portable media storage unit. The AV decoder 314 is responsible to render the AV media obtained from the content transfer subsystem 316 for presentation on the display device 318.

The acquirement of the predictive navigation information and AV media by DMP from DMS can be done in two different ways. First, the predictive navigation information and original AV media can be copied from DMS to enable offline playback on DMP via portable media storage unit.

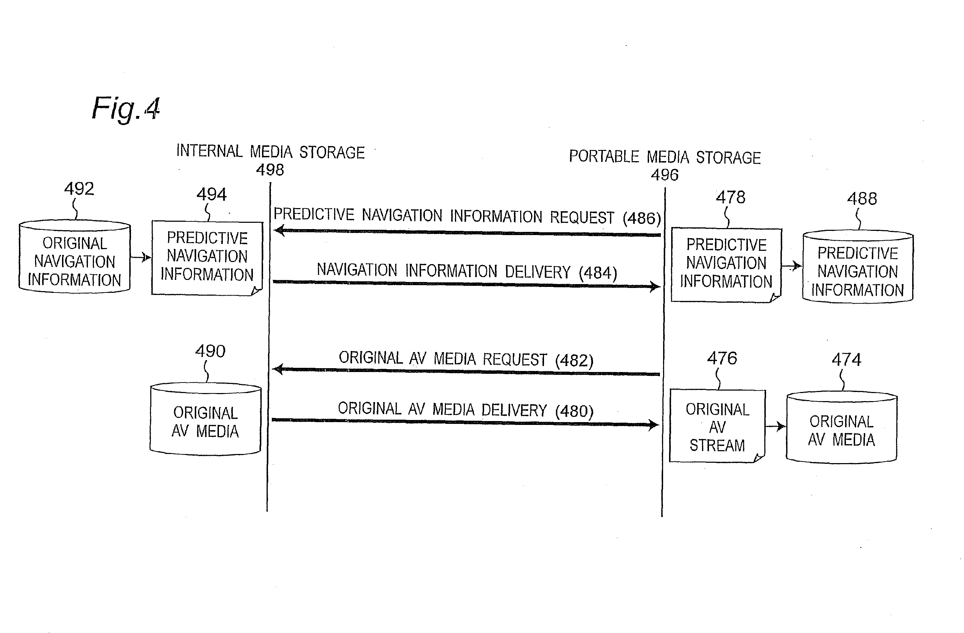

To illustrate the process, Fig. 4 shows the communication flow between the portable media storage 496 and internal media storage 498 of DMS. As shown in Fig. 2A, DMS stores the original AV media 490 and original navigation information 492 in its internal media storage unit 498. DMS has the navigation information prediction subsystem 206 as well to produce predictive navigation information. Upon receiving a request from portable media storage unit 496 for predictive navigation information 486, the navigation information prediction subsystem 206 in DMS generates the predictive navigation information 494 based on the original navigation information 492 stored in its internal media storage 498.

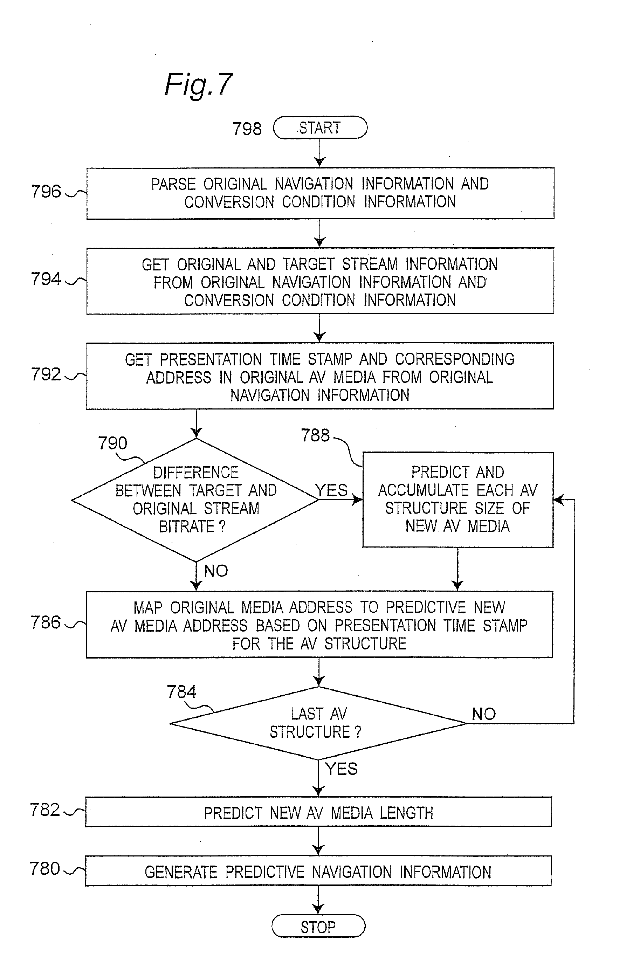

Details on the prediction of the navigation information are elaborated in later section based on Figs. 7, 9 and 10, Figs. 12 and 13. Once the requested navigation information is created, predictive navigation information 494 is delivered 484 via transmission channel to the requesting portable media storage unit 496 and stored in the portable media storage 488 along with the range map generated during navigation information prediction. The portable media storage unit 496 may subsequently request for a copy of the original AV media 482 corresponding to the copied predictive navigation information 478 to enable offline playback on another computing device bundled with portable media storage slot. The conversion condition table needs to be copied to the portable media storage unit as well. The conversion condition information is needed during transcoding of the copied original AV media to determine the transcoder input parameter. Once the requested original AV media is delivered 480 to the requesting portable media storage unit 496, the AV media is stored in the portable media storage 496.

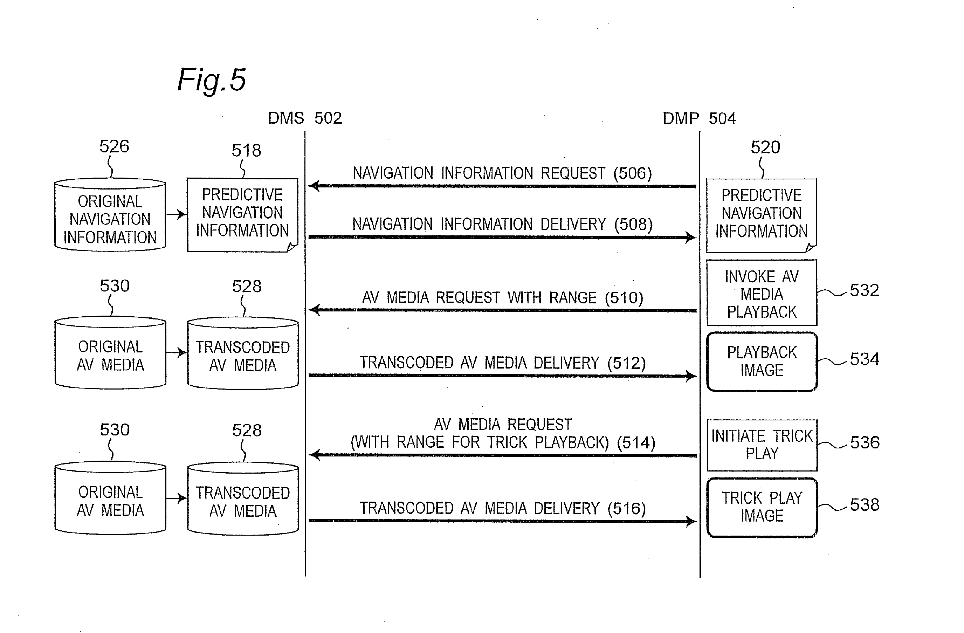

Alternatively, the communication flow illustrated in Fig. 5 occurs between DMS 502 and DMP 504 whenever DMP intends to playback the AV media stored in the DMS 530 via communication network. DMP has to, first, initiate request for the desired navigation information 506 from DMS before AV playback can be started. Based on DMP request, the DMS generates the requested predictive navigation information 518, if it is not available, based on the original navigation information 526 that are readily available in DMS. The predictive navigation information can be created without having to run the transcoding of requested AV media and thus, requesting DMP can receive the requested navigation information 520 in a real time fashion. Next, the generated predictive navigation information is sent to the DMP at 508.

Based on the received navigation information 520, DMP invokes stream playback 532 by sending an AV media request 510, specifying the desired range of AV media, to the DMS. Instead of transcoding the entire original AV media, the transcoder subsystem 204 retrieves and transcodes only the specified range of original AV media 530 to the requested AV format 528. The transcoded AV media is then delivered 512 to the requesting DMP, which begins the playback of the transcoded AV images 534 via its display device 318. In case trick play 536 (e.g. fast forward, skip) is desired, the DMP has to initiates a request that specifies the range of AV media corresponds to the selected trick play mode to the DMS 514. The transcoding process is then invoked at DMS to transcodes only the requested range of AV media, which is then delivered to the DMP 516. DMP playbacks the desired trick play image 538 upon receiving the requested range of transcoded AV media. Normal and trick play modes can be selected by DMP and the desired range of AV media for playback is specified in the AV media request directed to DMS.

Based on the communication flow in Fig. 5, Fig. 6 illustrates a more detailed embodiment of the interaction between Media Renderer 600 in DMS 688 and DMP 690. Whenever DMS 688 receives the navigation information request 602 from DMP 690, the navigation information generator 694 is invoked to prepare the desired navigation information. There are three sources necessary for the generation of predictive navigation information: the original navigation information sources 698, the original AV media 696, including both continuous and discontinuous AV media, in the DMS' storage unit, and the conversion condition information 614 provided by transcode manager 692. The navigation information generator 694 requests the original navigation information request 604 from the original navigation information source storage unit 698. The requested navigation information is then delivered 606 to the navigation information generator 694. The navigation information generator 694 also requests for the original AV Media 608 if it needs to retrieve any information from the original AV media. The requested original AV media is then delivered 610 to the navigation information generator 694. At the same time, the navigation information generator 694 requests for conversion condition information 612 that can be obtained from the transcode manager 692, which then sends the requested conversion condition information 614 to the navigation information generator 694.

Based on these three sources, the navigation information generator 694 predicts the contents of the desired navigation information and sends the newly generated navigation information 616 to the DMP 690. At the same time, range map information generated while preparing the predictive navigation information is stored 628 in the range map information storage unit 682 of DMS. The range map information 682 is used by both transcode manager 692 and padding handler 684.

Once DMP 690 receives the requested predictive navigation information 616, the DMP 690 starts requesting the range of AV media 618 it intends to play based on the contents of the predictive navigation information 616. Upon receiving the request 618, which specifies the range of AV media in desired format, the transcode manager 692 is invoked to determine the corresponding range of original AV media it needs to retrieve for transcoding purpose. First, the transcode manager 692 requests the range map information 630 from the range map information storage unit 682. The range map information is retrieved and delivered to the transcode manager 692. Based on the range map information 634, the transcoder manager 692 retrieves only the corresponding requested range of the original AV media 620 from the media stream storage 696 that contains both continuous and discontinuous streams. Once the range of AV media 622 is obtained, the transcode manager 692 transcodes this range of the original AV media 622 to the format supported by the DMP 690. Along with the range map information 632 obtained from range map information storage 682, the transcoded AV media 624 is then delivered to the padding handler 684 to determine whether padding is required to maintain consistency between predictive stream size and transcoded stream size. Lastly, the transcoded AV media, padded if necessary, is delivered 626 to the requesting DMP 690. Present invention incurs lower memory and storage consumption compared to the need of larger storage for the transcoding of entire AV media.

The most important data in navigation information is the mapping between presentation time and the address or position of its corresponding AV media. Fig. 7 illustrates the detailed flow of the navigation information prediction subsystem 798 in DMS. The sources to generate predictive navigation information are the original navigation information for original AV media and the conversion condition table.

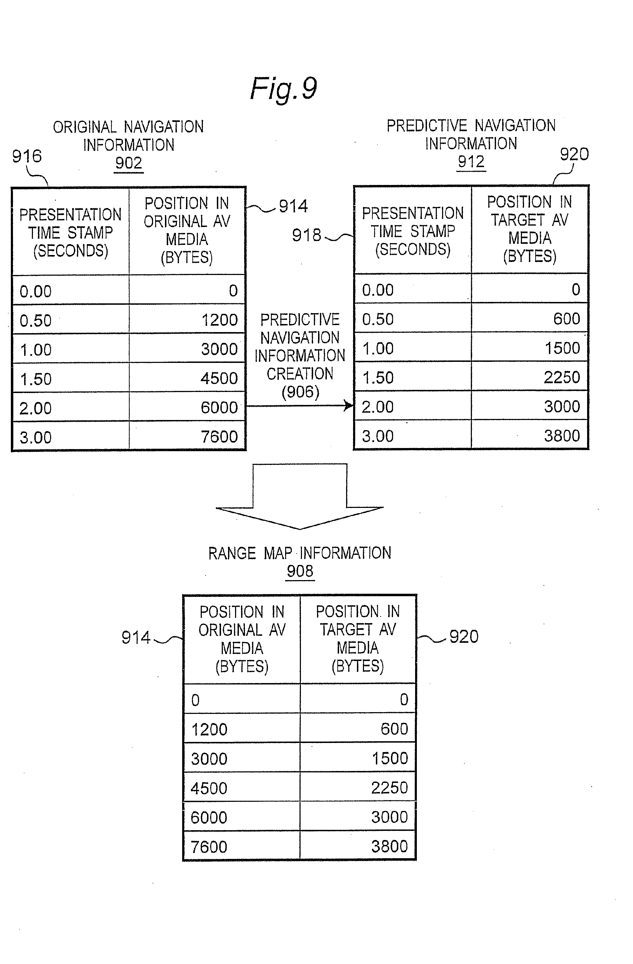

The navigation information subsystem first parses and gathers necessary information from the original navigation information and conversion condition table at step 796. The prediction subsystem obtains the original stream information and target stream information from both the conversion condition table at step 794. The original stream information includes the discontinuity flag, recording time, character set and others, while the conversion condition information includes the AV media bit rate, the frame rate, the key frame interval and stream size of both original and target stream. From the parsed information at step 796 and 794, the presentation time stamp and its corresponding address in original stream is extracted at step 792. Based on the conversion condition information, checking is done at step 790 to determine whether there is a change between original and target stream bit rate. If the target stream has different bit rate than the original stream bit rate, the size of each AV data structure of the format requested is predicted and accumulated based on presentation time interval and target bit rate at step 788. Otherwise, the mapping between the original stream address and the target stream address for each AV data structure is done at step 786 based on the presentation time interval, which is unchanged even after transcoding process. The mapping process between original and target stream address is elaborated in the description with reference to Fig. 9. Step 788 and 786 are repeated until the last AV data structure, which is checked after mapping of each AV data structure has been completed at step 784. Lastly, the new AV media length is predicted at step 782 from the accumulated predictive size of AV data structure. Then, the predictive navigation information is generated based on the parsed information at step 780.

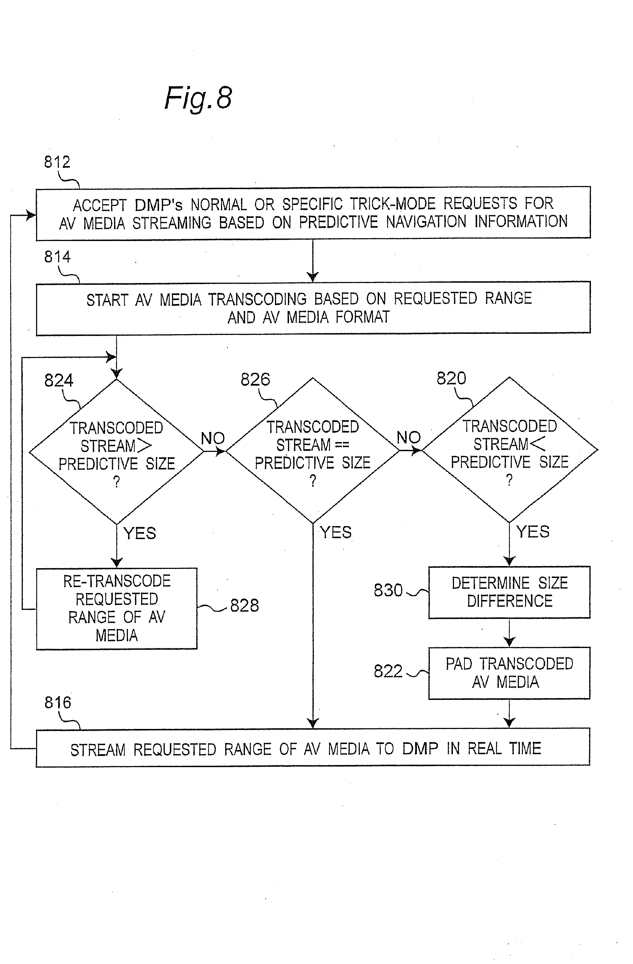

As elaborated in the description for Fig. 6, DMP can initiate the AV media playback once the requested predictive navigation information is received from DMS. To provide better picture on how consistency between original and target stream size is maintained, Fig. 8 shows a flow diagram of high-level steps performed by the transcode manager 692 collaborating with the padding handler 684, if necessary. The steps are implemented as instructions stored in computer readable memory units of system and executed by processor. At step 812, upon receiving DMP request for AV media, which can be invoked due to either normal or specific trick-play mode, the transcode manager 692 transcodes the requested range of AV media at step 814. The range of original AV media is obtained based on the range map information generated while predicting the navigation information. To ensure the size of AV media to be sent over to the DMP is consistent with the predictive stream size, present invention on the DMS provides DMS the control over adjusting the size of transcoded range of AV media to meet the predictive size indicated in predictive navigation information. Upon the completion of transcoding process, at step 820, 824 and 826, after transcoding, the transcoded AV data size is checked against the predicted AV data size to determine the next process, where DMS itself has the knowledge of the predictive AV media size recorded in the navigation information. There are three possible cases: first, the transcoded AV data size is exactly equal to the predictive AV data size 826; second, the transcoded AV data size is larger than the predictive AV data size 824; and third, the predictive AV data size is larger than the transcoded AV data size 820. If the transcoded AV data size is exactly equal to the predictive AV data size 826, the DMS streams the transcoded AV media to DMP in real time at step 816. If transcoded AV data size is larger than the predictive AV data size 824, the DMS re-transcodes the AV media to make sure that the transcoded AV media size is either less than or equal to the predicted AV media size at step 828. This can be done by setting the transcoder input parameters, e. g. by lowering the target AV bit rate or by using higher DCT coefficients for MPEG stream format. The re-transcoded AV media is then checked again against the predictive AV media size by repeating step 826, 824 and 820. This is to make sure that transcoded AV data size is not larger than predictive AV data size. Lastly, if transcoded AV data size is smaller than the predictive AV data size 820, the size difference is first determined at step 830, followed by the padding on the transcoded AV data to become exactly equal to the predicted size at step 822. In all cases, the transcoded AV media are streamed to the DMP in real time at step 816 after transcoding and padding or re-transcode if necessary. Consistency between AV media and its corresponding navigation information is achieved, which is important to ensure proper playback at DMP.

The transcode manager is responsible to transcode any range of AV media requested by the DMP at step 812 based on the navigation information generated by navigation information prediction subsystem 206. Depending on the playback modes, which can be either normal playback mode or trick play mode, the requested range of AV media is specified in the request initiated by DMP. Every step illustrated in Fig. 8 is repeated until the termination of the connection between DMS 688 and DMP 690.

While predicting the navigation information for requested AV media format, there are a few steps that adopted by the navigation information prediction subsystem 206 in DMS. Among them, the generation of range map information is important to determine the range of original and target AV media so that it matches AV media request by DMP. Range map information is generated based on two types of information: the presentation time stamp and its corresponding address or position in the AV media. The mapping of presentation time stamp to its corresponding position in AV media serves as the reference for the decoder to present the corresponding portion of AV media at specific presentation time. Fig. 9 illustrates an example on how the range map information 908 can be generated based on both the original navigation information 902 and predictive navigation information 912. In this example, the presentation time stamp and AV media position are indicated in seconds and bytes respectively. The offset or byte position of original AV data 914 from the beginning of the original AV media corresponding to the presentation time stamp can be retrieved from the original navigation information 902. By utilizing the same presentation time stamp as reference in both original and predictive navigation information at 916 and 918 respectively, the offset or byte position of the target AV data 920 from the beginning of the target AV media corresponding to the presentation time stamp is derived while predicting the requested navigation information 906, e.g. calculation of stream range based on stream bit rate and presentation interval. From the two navigation information 902 and 912, the range map information 908 can be created by matching the address of original and target AV media for every presentation time stamp that serves as the reference.

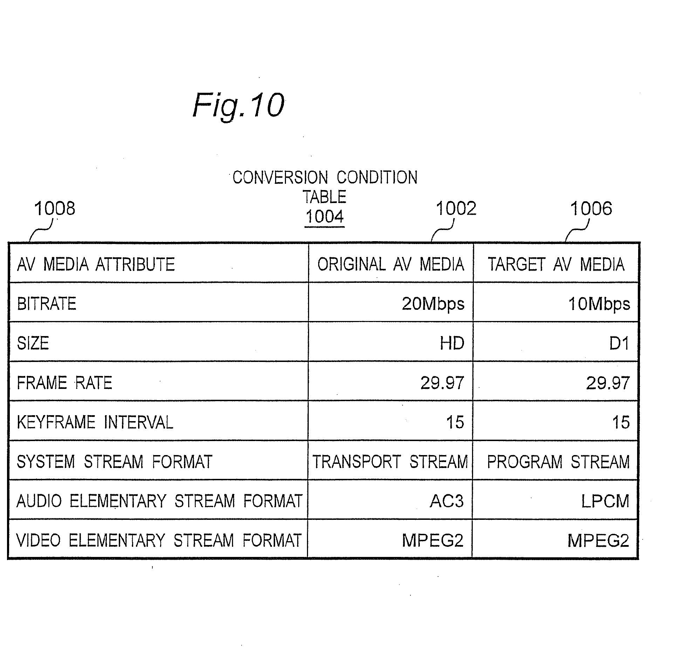

Another important source to predict navigation information is the conversion condition table 1004. The conversion condition table is used by DMS to predict the contents of the requested navigation information by DMP. DMS refers to conversion condition table 1004 to get the target bit rate and other transcoding parameters, which are necessary to predict the requested navigation information 912. Fig. 10 depicts an example of conversion condition table. The conversion condition table consists of the conversion condition information of both original AV media and target AV media. The conversion condition information includes the AV media attributes 1008 such as audio and video bit rate, frame rate, key frame interval, AV media format including system and elementary stream level and the length of both original AV media 1002 and target AV media 1006. For example, if the original AV media has been down converted at a lower bit rate, the mapping of presentation time stamp and the corresponding address of AV data is changed as the size of AV data structure for a presentation interval varies from the size of original AV data structure. Referring to the examples of navigation information and range map in Figs. 9 and 10, when the original bit rate of 20 Mbps reduces by 10 Mbps to 10 Mbps, the size of the AV media is reduced after transcoding, due to the decrease of bit rate. Conversion condition table 1004 serves as the source of navigation information prediction subsystem 206 especially in predicting the target AV media size.

The mapping between the presentation time stamp and its corresponding address in AV media is based on presentation time values that do not change for each particular AV media without editing. The AV position is calculated based on the target bit rate. Bit rate represents the total size of AV media in bits to be presented within a time interval. Therefore, for example, when the bit rate is reduced, the AV position at each presentation time is reduced to a lower offset as well. The relationship between bit rate and AV position is proportional.

Consistency between predictive navigation information and the transcoded AV media has to be maintained to ensure proper playback at DMP. In present invention, after the DMS transcodes and produces the requested AV media in the requested format, DMS has to ensure that the transcoded AV media size is consistent the requested AV media size as predicted and indicated in the predictive navigation information referred to by DMP.

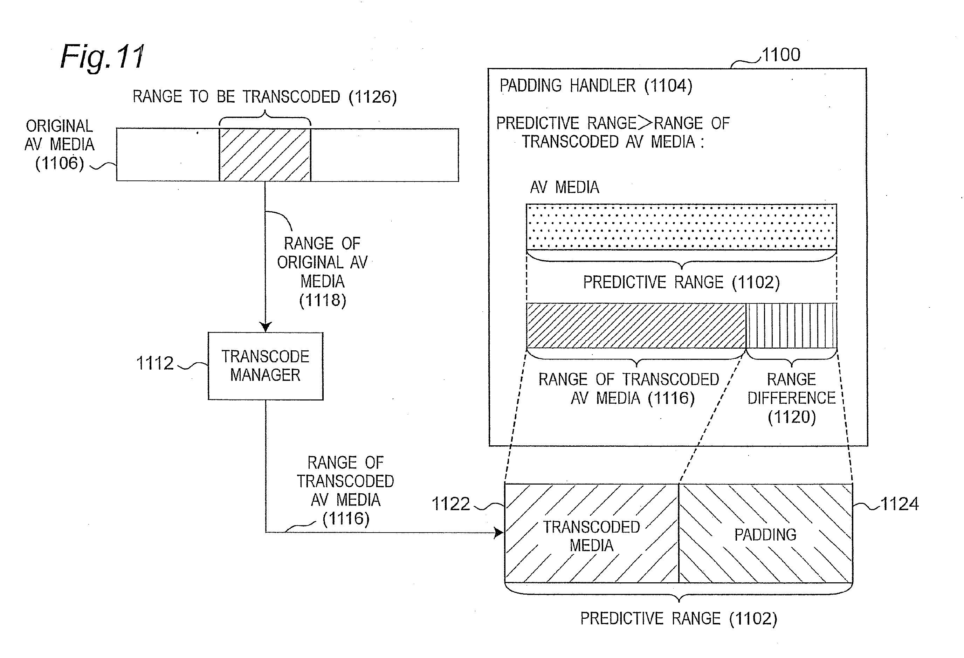

Fig. 11 shows an example process for step 812, 814, 820, 830 and 822 in Fig. 8, when transcoded AV media size is smaller than the predictive AV media size. Once the range of the original AV media to be transcoded 1126 is determined by DMS, the range of the original AV media is sent to the transcoder 1112 at 1118 for transcoding. When the transcoding process 1112 is complete, the padding handler 1104 is responsible to compare the size of the transcoded AV data 1116 with the size of the predictive AV data 1102 as indicated in the request. Based on the difference between the two sizes 1120, the padding size 1124 can be determined, which is equivalent to the size difference 1120 between the ranges of predictive and transcoded AV media size. Padding 1124 is added at the end of transcoded stream 1122 to ensure the consistency of predictive AV media size as requested. If the difference is zero, there is no need for padding.

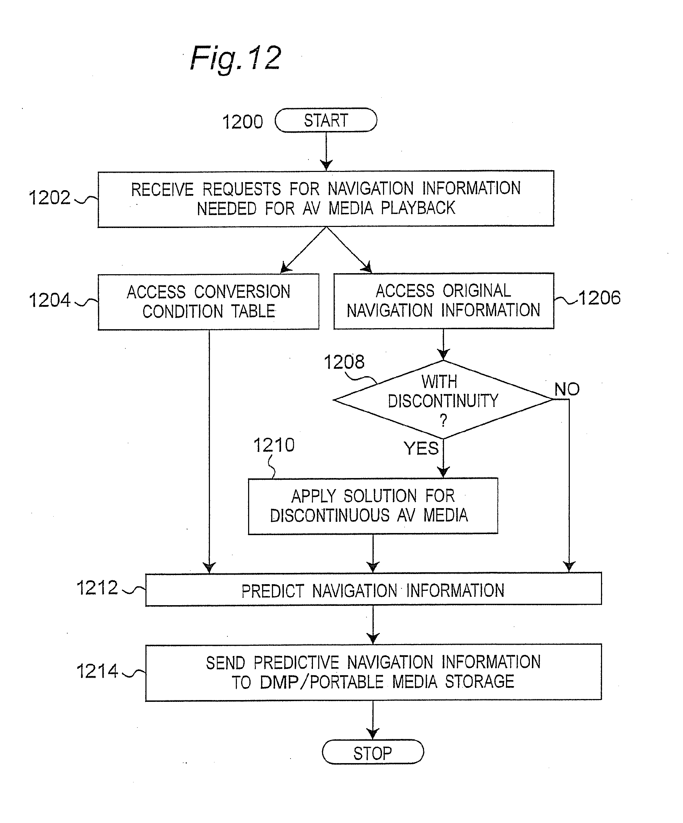

As described earlier, the navigation information prediction subsystem 206 supports both continuous and discontinuous AV media. Fig. 12 illustrates a flow diagram 1200 of high-level steps specifically performed by the navigation information prediction subsystem 206 for discontinuous AV media. Upon receiving request for navigation information at step 1202 from either DMP or portable media storage unit, while the navigation information prediction subsystem 206 retrieves conversion condition information from conversion condition table at step 1204 and necessary information from the original navigation information at step 1206, it checks if the original AV media contains any discontinuity at step 1208, e.g. checking the discontinuity flag. If the discontinuity exists in the stream, the solution to predict and generate navigation information for discontinuous stream is applied at step 1210. Next, the DMS generates the predictive navigation information as requested at step 1212 and sends it to the requesting DMP or copies it to the requesting portable media storage at step 1214.

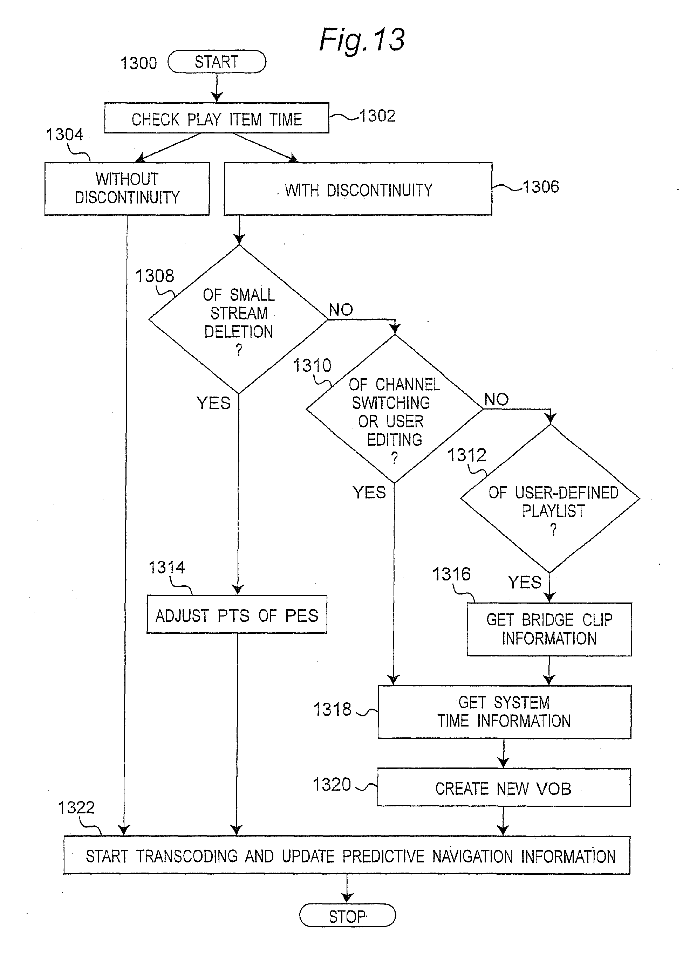

Fig. 13 depicts an example of detailed flow of the solutions for discontinuous streams in present invention, with BD-RE devices as the DMS and DVD-VR as the DMP. Based on BD-RE specifications, the discontinuity only occurs in multiple PlayItem streams. The discontinuity information can be retrieved from the BD-RE navigation information files. It can be interpreted in the playlist file that the discontinuity happens whenever the OUT_TIME, which means the presentation end time of a PlayItem, and subsequent IN_TIME, which means the presentation start time of a PlayItem, of two successive PlayItem are not equal. At step 1302, the IN_TIME and OUT_TIME of two consecutive PlayItem are checked to determine the existence of discontinuity. If no discontinuity is found in the AV media 1304, the predictive navigation information is updated at step 1322. Otherwise, if the discontinuity is found in the AV media 1306, the type of discontinuity detected in the AV media is identified at step 1308, 1310 and 1312. According to BD-RE specification, discontinuity in BD-RE stream can be categorized into four scenarios and the solutions for the identified scenario is applied. For discontinuity caused by the deletion of a very small portion of stream, the portion of AV media that should be deleted stays in the BD-RE TS. In order to eliminate this portion of stream while predicting the navigation information followed by transcoding of TS to desired AV media format, the PTS (Presentation Time Stamp) of PES (Packetized Elementary Stream) of the AV media is adjusted at step 1314 in conjunction with the navigation information prediction process at step 1322 since the discontinuous stream portion is not transcoded. For discontinuity caused by either change of system clock or presentation time (e.g. channel switching by broadcast station or user editing) at step 1310, the system time information is obtained at step 1318 followed by the creation of new VOB at step 1320. The number of VOB is dependent on the number of PlayItem in the original AV media. For instance, if the number of PlayItem with this type of discontinuity in the TS is five, the number of VOB should be five. This is then followed by the update of predictive navigation information at step 1322 to include the discontinuity information. Lastly, if the discontinuity is detected in a user-defined playlist at step 1312, the bridge clip information has to be extracted first at step 1316 to retrieve the presentation time interval of all the clips being combined in the user-defined playlist before step 1318, 1320 and 1322 are performed.

INDUSTRIAL APPLICABILITY

The present invention can be used in method and apparatus for playing video data of high bit rate format by a player capable of playing video data of low bit rate format.

**Claims**

1.  A method for playing a video data of high bit rate format stored in a storage device by a player which is capable of playing a video data of low bit rate format, said method comprising:

    reading an original navigation information from the video data of high bit rate format;
    converting the original navigation information into a predictive navigation information which is applicable to the video data of low bit rate format;
    requesting, based on the predictive navigation information, a section of the video data of low bit rate format in a low bit rate byte information, said low bit rate byte information including a starting byte position and an end byte position of the section of the video data of low bit rate format for playing by the player;
    converting, based on the predictive navigation information and the original navigation information, the low bit rate byte information into a high bit rate byte information, said high bit rate byte information including a starting byte position and an end byte position of the section of the video data of high bit rate format;

retrieving, based on the high bit rate byte information, the section of the video data of high bit rate format from the storage device; and

transcoding the section of the video data of high bit rate format to a section of the video data of low bit rate format.

2. An apparatus for playing a video data of high bit rate format stored in a storage device by a player which is capable of playing a video data of low bit rate format, said apparatus comprising:

a CPU (201, 301) which is capable of doing the following operations:

reading an original navigation information from the video data of high bit rate format;

converting the original navigation information into a predictive navigation information which is applicable to the video data of low bit rate format;

requesting, based on the predictive navigation information, a section of the video data of low bit rate format in a low bit rate byte information, said low bit rate byte information including a starting byte position and an end byte position of the section of the video data of low bit rate format for playing by the player;

converting, based on the predictive navigation information and the original navigation information, the low bit rate byte information into a high bit rate byte information, said high bit rate byte information including a starting byte position and an end byte position of the section of the video data of high bit rate format;

retrieving, based on the high bit rate byte information, the section of the video data of high bit rate format from the storage device;

transcoding the section of the video data of high bit rate format to a section of the video data of low bit rate format; and

a decoder (314) for decoding the video data of low bit rate format.

3. A method for playing a video data of high bit rate format stored in a storage device of a server (DMS) by a player (DMP) which is capable of playing a video data of low bit rate format, said method comprising:

reading an original navigation information from the video data of high bit rate format in said server;

converting the original navigation information into a predictive navigation information which is applicable to the video data of low bit rate format in said server;

transferring said predictive navigation information to said player;

requesting by said player, based on the predictive navigation information, a section of the video data of low bit rate format in a low bit rate byte information, said low bit rate byte information including a starting byte position and an end byte position of the section of the video data of low bit rate format for playing by the player;

converting, based on the predictive navigation information and the original navigation information, the low bit rate byte information into a high bit rate byte information, said high bit rate byte information including a starting byte position and an end byte position of the section of the video data of high bit rate format;

retrieving, based on the high bit rate byte information, the section of the video data of high bit rate format from the storage device in said server; and

transcoding the section of the video data of high bit rate format to a section of the video data of low bit rate format.

4. The method as claimed in claim 3, wherein said converting the low bit rate byte information comprises converting the low bit rate byte information into a time domain information which is further converted to the high bit rate byte information.

5. The method as claimed in claim 3, further comprising range map information generating based on the predictive navigation information and the original navigation information, said range map information containing low bit rate byte information and corresponding high bit rate byte information.

6. The method as claimed in claim 3, further comprising padding of the section of the video data of low bit rate format.

7. The method as claimed in claim 3, further comprising conversion condition information generating, said conversion condition information containing at least the high bit rate which is an attribute of the video data of high bit rate format, and the low bit rate which is an attribute of the video data of low bit rate format.

8. The method as claimed in claim 3, wherein said video data of high bit rate format is a video data of BD-RE format.

9. The method as claimed in claim 3, wherein said video data of low bit rate format is a video data of DVD-VR format.

10. The method as claimed in claim 3, wherein said navigation information is an index information.

11. The method as claimed in claim 3, wherein said navigation information is an IFO.

12. An apparatus for playing a video data of high bit rate format stored in a storage device of a server (DMS) by a player (DMP) which is capable of playing a video data of low bit rate format, said apparatus comprising:

    a first CPU (201) provided in said server and capable of doing the following operations:

    reading an original navigation information from the video data of high bit rate format in said server;
    converting the original navigation information into a predictive navigation information which is applicable to the video data of low bit rate format in said server;
    transferring said predictive navigation information to said player; and

    a second CPU (301) provided in said player and capable of doing the following operations:

    requesting by said player, based on the predictive navigation information, a section of the video data of low bit rate format in a low bit rate byte information, said low bit rate byte information including a starting byte position and an end byte position of the section of the video data of low bit rate format for playing by the player;

    at least one of said first CPU and said second CPU capable of doing the following operation:

    converting, based on the predictive navigation information and the original navigation information, the low bit rate byte information into a high bit rate byte information, said high bit rate byte information including a starting byte position and an end byte position of the section of the video data of high bit rate format;

    said first CPU capable of doing the following operation:

    retrieving, based on the high bit rate byte information, the section of the video data of high bit rate format from the storage device in said server; and

    at least one of said first CPU and said second CPU capable of doing the following operation:

    transcoding the section of the video data of high bit rate format to a section of the video data of low bit rate format.

13. The apparatus as claimed in claim 12, where in said operation of converting the low bit rate byte information is done by said first CPU.

14. The apparatus as claimed in claim 12, wherein said operation of transcoding is done by said first CPU.

15. The apparatus as claimed in claim 12, wherein said operation of converting the low bit rate byte information comprises converting the low bit rate byte information into a time domain information which is further converted to the high bit rate byte information.

16. The apparatus as claimed in claim 12, wherein at least one of said first CPU and said second CPU is capable of doing the operation of range map information generating based on the predictive navigation information and the original navigation information, said range map information containing low bit rate byte information and corresponding high bit rate byte information.

17. The apparatus as claimed in claim 12, wherein at least one of said first CPU and said second CPU is capable of doing the operation of padding of the section of the video data of low bit rate format.

18. The apparatus as claimed in claim 12, wherein at least one of said first CPU and said second CPU is capable of doing the operation of conversion condition information generating, said conversion condition information containing at least the high bit rate which is an attribute of the video data of high bit rate format, and the low bit rate which is an attribute of the video data of low bit rate format.

**19.** The apparatus as claimed in claim 12, wherein said video data of high bit rate format is a video data of BD-RE format.

**20.** The apparatus as claimed in claim 12, wherein said video data of low bit rate format is a video data of DVD-VR format.

**21.** The apparatus as claimed in claim 12, wherein said navigation information is an index information.

**22.** The apparatus as claimed in claim 12, wherein said navigation information is an IFO.

## Fig.1

EP 2 061 241 A1

EP 2 061 241 A1

## Fig.2A

DMS 200

CPU 201

EP 2 061 241 A1

## Fig.2B

DMP 300

CPU 301

DISPLAY DEVICE

318

FILE SYSTEM (304)

MEDIA DIRECTORY (320)

MEDIA DIRECTORY HANDLER (322)

AV MEDIA 306

NAVIGATION INFORMATION 308

CONTENT TRANSFER SUBSYSTEM

316

AV DECODER 314

## Fig.3A

DMS 200                  DMP 300

PREDICTIVE NAVIGATION INFORMATION REQUEST (486)

NAVIGATION INFORMATION DELIVERY (484)

TRANSCODED AV MEDIA REQUEST (482)

TRANSCODED AV MEDIA DELIVERY (480)

ORIGINAL NAVIGATION INFORMATION

PREDICTIVE NAVIGATION INFORMATION

CONVERSION CONDITION TABLE

ORIGINAL AV MEDIA

TRANSCODED AV MEDIA

478

PREDICTIVE NAVIGATION INFORMATION

488

PREDICTIVE NAVIGATION INFORMATION

476

TRANSCODED AV STREAM

474

TRANSCODED AV MEDIA

## Fig.3B

ORIGINAL NAVIGATION
INFORMATION
902

916                                914

| PRESENTATION TIME STAMP (SECONDS) | POSITION IN ORIGINAL AV MEDIA (BYTES) |
|---|---|
| 0.00 | 0 |
| 0.50 | 1200 |
| 1.00 | 3000 |
| 1.50 | 4500 |
| 2.00 | 6000 |
| 3.00 | 7600 |

CONVERSION CONDITION
TABLE
1004

1008                1002        1006

| AV MEDIA ATTRIBUTE | ORIGINAL AV MEDIA | TARGET AV MEDIA |
|---|---|---|
| BITRATE | 20Mbps | 10Mbps |
| SIZE | HD | D1 |
| FRAME RATE | 29.97 | 29.97 |
| KEYFRAME INTERVAL | 15 | 15 |
| SYSTEM STREAM FORMAT | TRANSPORT STREAM | PROGRAM STREAM |
| AUDIO ELEMENTARY STREAM FORMAT | AC3 | LPCM |
| VIDEO ELEMENTARY STREAM FORMAT | MPEG2 | MPEG2 |

PREDICTIVE NAVIGATION
INFORMATION
912

918                                920

| PRESENTATION TIME STAMP (SECONDS) | POSITION IN TARGET AV MEDIA (BYTES) |
|---|---|
| 0.00 | 0 |
| 0.50 | 600 |
| 1.00 | 1500 |
| 1.50 | 2250 |
| 2.00 | 3000 |
| 3.00 | 3800 |

*Fig.4*

INTERNAL MEDIA STORAGE
498

PORTABLE MEDIA STORAGE
496

492
ORIGINAL NAVIGATION INFORMATION

494
PREDICTIVE NAVIGATION INFORMATION

PREDICTIVE NAVIGATION INFORMATION REQUEST (486)

NAVIGATION INFORMATION DELIVERY (484)

478
PREDICTIVE NAVIGATION INFORMATION

488
PREDICTIVE NAVIGATION INFORMATION

490
ORIGINAL AV MEDIA

ORIGINAL AV MEDIA REQUEST (482)

ORIGINAL AV MEDIA DELIVERY (480)

476
ORIGINAL AV STREAM

474
ORIGINAL AV MEDIA

EP 2 061 241 A1

## Fig.5

EP 2 061 241 A1

DMS 502          DMP 504

**526** → ORIGINAL NAVIGATION INFORMATION

**518** → PREDICTIVE NAVIGATION INFORMATION

NAVIGATION INFORMATION REQUEST (506) ←

NAVIGATION INFORMATION DELIVERY (508) →

**520** → PREDICTIVE NAVIGATION INFORMATION

INVOKE AV MEDIA PLAYBACK — 532

**530** → ORIGINAL AV MEDIA

**528** → TRANSCODED AV MEDIA

AV MEDIA REQUEST WITH RANGE (510) ←

TRANSCODED AV MEDIA DELIVERY (512) →

PLAYBACK IMAGE — 534

**530** → ORIGINAL AV MEDIA

**528** → TRANSCODED AV MEDIA

AV MEDIA REQUEST (WITH RANGE FOR TRICK PLAYBACK) (514) ←

TRANSCODED AV MEDIA DELIVERY (516) →

INITIATE TRICK PLAY — 536

TRICK PLAY IMAGE — 538

Fig.6

MEDIA RENDERER (600)

ORIGINAL NAVIGATION
INFORMATION REQUEST (604)

NAVIGATION
INFORMATION
GENERATOR
694

NAVIGATION
INFORMATION REQUEST (602)

690

DMP

ORIGINAL
NAVIGATION
INFORMATION
SOURCE

PREDICTIVE NAVIGATION
INFORMATION (616)

ORIGINAL NAVIGATION
INFORMATION (606)

PREDICTIVE NAVIGATION
INFORMATION (636)

682

698

ORIGINAL AV MEDIA
REQUESTS (608)

RANGE MAP INFO
(628)

PREDICTIVE
NAVI INFO
AND RANGE
MAP INFO

ORIGINAL AV MEDIA
(610)

CONVERSION
CONDITION INFO
REQUEST
(612)

PADDED
TRANSCODED
AV MEDIA
(626)

CONTINUOUS
AND
DISCONTINUOUS
AV
MEDIA

CONVERSION
CONDITION
INFORMATION (614)

RANGE MAP
INFO (632)

ORIGINAL AV MEDIA
REQUEST (620)

RANGE MAP INFO
REQUEST (630)

692

696

ORIGINAL AV
MEDIA (622)

TRANSCODE
MANAGER

RANGE MAP INFO (634)

TRANSCODED AV MEDIA (624)

PADDING
HANDLER

684

AV MEDIA REQUEST (618)

DMP (688)

EP 2 061 241 A1

22

## Fig.7

798 ( START )

796 — PARSE ORIGINAL NAVIGATION INFORMATION AND
CONVERSION CONDITION INFORMATION

794 — GET ORIGINAL AND TARGET STREAM INFORMATION
FROM ORIGINAL NAVIGATION INFORMATION AND
CONVERSION CONDITION INFORMATION

792 — GET PRESENTATION TIME STAMP AND CORRESPONDING
ADDRESS IN ORIGINAL AV MEDIA FROM ORIGINAL
NAVIGATION INFORMATION

790
DIFFERENCE
BETWEEN TARGET AND     YES
ORIGINAL STREAM
BITRATE ?

788 — PREDICT AND
ACCUMULATE EACH AV
STRUCTURE SIZE OF
NEW AV MEDIA

NO

786 — MAP ORIGINAL MEDIA ADDRESS TO PREDICTIVE NEW
AV MEDIA ADDRESS BASED ON PRESENTATION TIME STAMP
FOR THE AV STRUCTURE

784
LAST AV
STRUCTURE ?     NO

YES

782 — PREDICT NEW AV MEDIA LENGTH

780 — GENERATE PREDICTIVE NAVIGATION INFORMATION

( STOP )

# Fig.8

812

ACCEPT DMP's NORMAL OR SPECIFIC TRICK-MODE REQUESTS FOR AV MEDIA STREAMING BASED ON PREDICTIVE NAVIGATION INFORMATION

814

START AV MEDIA TRANSCODING BASED ON REQUESTED RANGE AND AV MEDIA FORMAT

824

TRANSCODED STREAM > PREDICTIVE SIZE ?

NO

826

TRANSCODED STREAM == PREDICTIVE SIZE ?

NO

820

TRANSCODED STREAM < PREDICTIVE SIZE ?

YES

YES

YES

RE-TRANSCODE REQUESTED RANGE OF AV MEDIA

828

830

DETERMINE SIZE DIFFERENCE

822

PAD TRANSCODED AV MEDIA

816

STREAM REQUESTED RANGE OF AV MEDIA TO DMP IN REAL TIME

# Fig.9

ORIGINAL NAVIGATION
INFORMATION
902

916

| PRESENTATION TIME STAMP (SECONDS) | POSITION IN ORIGINAL AV MEDIA (BYTES) |
|---|---|
| 0.00 | 0 |
| 0.50 | 1200 |
| 1.00 | 3000 |
| 1.50 | 4500 |
| 2.00 | 6000 |
| 3.00 | 7600 |

914

918

PREDICTIVE
NAVIGATION
INFORMATION
CREATION
(906)

PREDICTIVE NAVIGATION
INFORMATION
912

920

| PRESENTATION TIME STAMP (SECONDS) | POSITION IN TARGET AV MEDIA (BYTES) |
|---|---|
| 0.00 | 0 |
| 0.50 | 600 |
| 1.00 | 1500 |
| 1.50 | 2250 |
| 2.00 | 3000 |
| 3.00 | 3800 |

RANGE MAP INFORMATION
908

914

920

| POSITION IN ORIGINAL AV MEDIA (BYTES) | POSITION IN TARGET AV MEDIA (BYTES) |
|---|---|
| 0 | 0 |
| 1200 | 600 |
| 3000 | 1500 |
| 4500 | 2250 |
| 6000 | 3000 |
| 7600 | 3800 |

# Fig.10

CONVERSION CONDITION
TABLE
1004                                1002              1006

1008

| AV MEDIA ATTRIBUTE | ORIGINAL AV MEDIA | TARGET AV MEDIA |
|---|---|---|
| BITRATE | 20Mbps | 10Mbps |
| SIZE | HD | D1 |
| FRAME RATE | 29.97 | 29.97 |
| KEYFRAME INTERVAL | 15 | 15 |
| SYSTEM STREAM FORMAT | TRANSPORT STREAM | PROGRAM STREAM |
| AUDIO ELEMENTARY STREAM FORMAT | AC3 | LPCM |
| VIDEO ELEMENTARY STREAM FORMAT | MPEG2 | MPEG2 |

*Fig.11*

PADDING HANDLER (1104)

PREDICTIVE RANGE>RANGE OF TRANSCODED AV MEDIA :

AV MEDIA

PREDICTIVE RANGE (1102)

RANGE OF TRANSCODED AV MEDIA (1116)

RANGE DIFFERENCE (1120)

1124

PADDING

TRANSCODED MEDIA

PREDICTIVE RANGE (1102)

1122

1100

RANGE TO BE TRANSCODED (1126)

ORIGINAL AV MEDIA (1106)

RANGE OF ORIGINAL AV MEDIA (1118)

TRANSCODE MANAGER

1112

RANGE OF TRANSCODED AV MEDIA (1116)

## Fig.12

1200 ( START )

1202 — RECEIVE REQUESTS FOR NAVIGATION INFORMATION NEEDED FOR AV MEDIA PLAYBACK

1204 — ACCESS CONVERSION CONDITION TABLE

ACCESS ORIGINAL NAVIGATION INFORMATION —1206

1208 — WITH DISCONTINUITY ?

NO

YES

1210 — APPLY SOLUTION FOR DISCONTINUOUS AV MEDIA

1212 — PREDICT NAVIGATION INFORMATION

1214 — SEND PREDICTIVE NAVIGATION INFORMATION TO DMP/PORTABLE MEDIA STORAGE

( STOP )

## Fig.13

1300 ( START )

CHECK PLAY ITEM TIME ~1302

1304

WITHOUT DISCONTINUITY

WITH DISCONTINUITY ~1306

1308 OF SMALL STREAM DELETION ?

NO

YES

1310 OF CHANNEL SWITCHING OR USER EDITING ?

NO

YES

1312 OF USER-DEFINED PLAYLIST ?

YES

1314 ADJUST PTS OF PES

1316 GET BRIDGE CLIP INFORMATION

1318 ~ GET SYSTEM TIME INFORMATION

1320 ~ CREATE NEW VOB

1322 START TRANSCODING AND UPDATE PREDICTIVE NAVIGATION INFORMATION

( STOP )

## INTERNATIONAL SEARCH REPORT

| International application No. |
| --- |
| PCT/JP2007/066449 |

A. CLASSIFICATION OF SUBJECT MATTER
*H04N5/93(2006.01)i, G11B27/10(2006.01)i, H04N5/91(2006.01)i, H04N5/92(2006.01)i, H04N7/26(2006.01)i*

According to International Patent Classification (IPC) or to both national classification and IPC

B. FIELDS SEARCHED

Minimum documentation searched (classification system followed by classification symbols)
G11B20/10-20/16, G11B27/00-27/34, H04N5/76, H04N5/765, H04N5/80-5/956, H04N7/12, H04N7/26-7/32

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | US 2004/36800 A1  (Mitsuharu Ohki),<br>26 February, 2004 (26.02.04),<br>Full text; all drawings<br>& JP 2004-88244 A | 1-22 |
| A | WO 2004/57869 A1  (Matsushita Electric Industrial Co., Ltd.),<br>08 July, 2004 (08.07.04),<br>Full text; all drawings<br>& EP 1580998 A1          & US 2006/98960 A1 | 1-22 |
| A | JP 2005-151173 A  (Sharp Corp.),<br>09 June, 2005 (09.06.05),<br>Full text; all drawings<br>(Family: none) | 1-22 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 October, 2007 (10.10.07) | Date of mailing of the international search report<br>23 October, 2007 (23.10.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

**EP 2 061 241 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6463445 B1
- US 20040054689 A1
- EP 1524855 A1
- EP 0920203 A2
- US 20030021587 A1